# EUROPEAN PATENT APPLICATION

(11) **EP 2 693 311 A1**
(43) Date of publication of application: **05.02.2014**
(21) Application number: 12764860.8
(22) Date of filing: 13.01.2012
(51) Int. Cl.: G06F 3/041, B60R 16/02, G06F 3/01, G06F 3/033, G06F 3/048

(54) **OPERATION DEVICE**

(30) Priority: 30.03.2011 JP 2011076271
(71) Applicant: Honda Motor Co., Ltd., Minato-ku Tokyo 107-8556 (JP)
(72) Inventor: SHIBATA Naoki, Wako-shi, Saitama 351-0193 (JP)
(74) Representative: Feller, Frank
(86) International application number: PCT/JP2012/050568
(87) International publication number: WO 2012/132495

(57) **Abstract**

An operation device is provided with: a display screen that displays an operation target that can be operated by an operator; an input device that can perform operational input with respect to a direction of movement of the operation target on the display screen; and a feedback device that implements, in response to the operation target having moved on the display screen in accordance with operational input by the input device, predetermined feedback that can be perceived without the operator looking directly at the operation target displayed on the display screen. The input device can perform operational input with respect to the movement speed and amount of movement in the direction of movement of the operation target on the display screen, and the feedback device implements the feedback in such a way that a state of the feedback continuously changes in response to a change in at least one of the movement speed of the operation target and the relative movement amount with respect to a position of the operation target on the display screen prior to the start of the movement.

## Description

### TECHNICAL FIELD

This invention relates to an operation device.

Priority is claimed on Japanese Patent Application No. 2011-076271, filed March 30, 2011, the content of which is incorporated herein by reference.

### BACKGROUND ART

Heretofore, for example, in a remote controller that can control a pointer displayed on a screen remotely, a technique is known in which, when the pointer moves from one region to another while this remote controller is being operated, a bump provided in an operating section of the remote controller is made to extend. Thereby, a tactile stimulus is given to a finger operating the operating section, and the operator can perceive via feedback that the pointer has moved to another region, even if he or she is not observing the movement of the pointer on the screen carefully (for example, refer to Patent Document 1).

### [Prior Art Document]

### [Patent Document]

[Patent Document 1] Japanese Unexamined Patent Application, First Publication No. 2005-4365

### DISCLOSURE OF INVENTION

### [Problems to be Solved by the Invention]

However, using the above-described conventional technique, the construction is such that feedback is only generated when the pointer passes over a boundary line between one region and another region. Therefore, there is a problem in that, in the case where the amount of movement of an operation target needs to be sensed, for example in the case where the amount of movement of a scroll bar or the amount of movement of an icon is sensed, it is not effective.

The present invention has been made in view of the above circumstances, and has an object of providing an operation device that enables an operator to perceive the movement of an operation object as feedback without the need to gaze at a screen.

### [Means for Solving the Problem]

(1) In order to solve the above problem to achieve such an object, a first aspect of the present invention is an operation device provided with: a display screen that displays an operation target that can be operated by an operator; an input device that can perform operational input with respect to a direction of movement of the operation target on the display screen; and a feedback device that implements, in response to the operation target having moved on the display screen in accordance with operational input by the input device, predetermined feedback that can be perceived without the operator looking directly at the operation target displayed on the display screen. The input device can perform operational input with respect to the movement speed and amount of movement in the direction of movement of the operation target on the display screen, and the feedback device implements the feedback in such a way that a state of the feedback continuously changes in response to a change in at least one of the movement speed of the operation target and the relative movement amount with respect to a position of the operation target on the display screen prior to the start of the movement.
(2) In the aspect described in (1), the following construction may be used: The feedback device has an audible feedback device that implements the feedback by generating sound, and changes at least one of the frequency and volume of the sound generated from the audible feedback device in an increasing trend as at least one of the movement speed of the operation target and the relative movement amount with respect to a position of the operation target on the display screen prior to the start of the movement increases.
(3) In the aspects described in (1) and (2), the following construction may be used: The feedback device has an audible feedback device that implements the feedback by generating sound, and changes an image of the sound in response to a change in the movement direction of the operation target so as to correspond to the movement direction of the operation target.
(4) In any one of the aspects described in (1) to (3), the following construction may be used: The display screen and the feedback device are mounted in a vehicle, the feedback device contains an audible feedback device that implements the feedback by generating sound, the input device is disposed in a predetermined location in a vehicle compartment where a driver of the vehicle can operate, and has an obstacle detection device that detects a direction in which an obstacle approaching the vehicle exists, and the audible feedback device, in a case where an obstacle approaching the vehicle is detected by the obstacle detection device, generates a different sound from the sound generated by the movement of the operation target, using a sound image in a direction where the obstacle detected by the obstacle detection device exists.
(5) In the aspect described in (1), the following construction may be used: The feedback device has a vibratory feedback device that implements the feedback by transmitting vibrations to the input device, and changes at least one of the frequency and amplitude of the vibrations transmitted to the input device by the vibratory feedback device in an increasing trend as at least one of the movement speed of the operation target and the relative movement amount with respect to the position of the operation target on the display screen prior to the start of the movement increases.
(6) In any one of the aspects described in (1) to (5), the following construction may be used: There is further provided a line of sight detection device that detects a direction of the operator's line of sight, and that determines whether or not the direction of the line of sight detected is toward the display screen, and the feedback device, in a case where the line of sight detection device determines that the direction of the operator's line of sight is not toward the display screen, implements the feedback, and in a case where the line of sight detection device determines that the direction of the operator's line of sight is toward the display screen, does not implement the feedback.
(7) In any one of the aspects described in (1) to (6), the following construction may be used: The display screen is a display that is disposed below a top surface of an instrument panel installed in a vehicle compartment, and the input device has a substantially planar operating section disposed in a predetermined location in the vehicle compartment where a driver of the vehicle can operate, detects a contact location of the driver's finger with respect to the operating section, and performs operational input with respect to the operation target corresponding to the detected result.

### [Advantageous Effects of the Invention]

According to the aspect described in (1), since continuous feedback is implemented in response to the movement of the operation target, the operator can perceive the movement state of the operation target (that is, at least one of the movement speed and the relative movement amount with respect to the position on the display screen prior to the start of the movement) accurately, without having to gaze at the operation target displayed on the display screen.

As a result, the operator can learn the relationship between the input operations and the movement state of the operation target with respect to an input device easily, enabling the operation target to be operated without looking at the display screen, that is, to perform blind operation easily, which enables the convenience to be improved.

According to the aspect described in (2), since feedback is implemented using at least one of the frequency and the sound volume of a sound, it is possible to have the operator perceive easily, continuous change in the movement state of the operation target.

According to the aspect described in (3), since feedback is implemented using a sound image, it is possible to have the operator perceive easily, a continuous change in the movement state of the operation target.

According to the aspect described in (4), it is possible to have a driver performing an input operation to the input device, perceive the direction in which an obstacle approaches the vehicle promptly and accurately, which enables the convenience and the safety of the travelling vehicle to be improved.

According to the aspect described in (5), since feedback is implemented using vibration, it is possible to have only the operator perceive easily, a continuous change in the movement state of the operation target, so that it is possible to avoid excessive feedback being implemented.

According to the aspect described in (6), in the case where the direction of the operator's line of sight is toward the display screen, feedback by display is implemented, making other feedback unnecessary, so that it is possible to avoid excessive feedback from being implemented, and to prevent the operator from being discomforted or disturbed.

According to the aspect described in (7), even in the case where an operation target is displayed on a display disposed in a location where the driver's line of sight departs greatly from the front windshield of the vehicle (that is, below the top surface of an instrument panel mounted in the vehicle compartment), the driver can perceive the movement state of the operation target accurately with no need to gaze at the operation target displayed on the display screen. Hence so-called blind operation can be performed easily, and the convenience can be improved.

Furthermore, even with respect to an input device such as a touch panel for which it is difficult to ascertain a tactile relationship with the state of the operation target (for example, the location of a cursor, the amount of movement, etc.), by implementing continuous feedback the operator can perceive the state of movement of the operation target accurately and easily with no need to gaze at the operation target displayed on the display screen. Hence so-called blind operation can be performed easily, and the convenience can be improved.

### BRIEF DESCRIPTION OF THE DRAWINGS

FIG. 1 is a block diagram of an operation device according to a first embodiment of the present invention.
FIG. 2 is a diagram showing an example of a relationship between movement state amount of the operation device and feedback amount.
FIG. 3 is a diagram showing an example of a relationship between movement timing of the operation target on a display screen of the operation device and feedback amount.
FIG. 4 is a diagram showing an example of a relationship between movement timing of the operation target on the display screen of the operation device and sound volume, which is the feedback amount.
FIG. 5 is a diagram showing an example of a relationship between movement timing of the operation target on the display screen of the operation device and interval, which is the feedback amount.
FIG. 6 is a diagram showing an example of a relationship between movement timing of the operation target on the display screen of the operation device and frequency of repeating a sound output, which is the feedback amount.
FIG. 7 is a diagram showing an example of a relationship between movement timing of the operation target on the display screen of the operation device and amplitude of vibrations, which is the feedback amount.
FIG. 8A is a diagram showing location of the operation target on the display screen of the operation device.
FIG. 8B is a diagram showing an example of a relationship between the X coordinate of the operation target on the display screen of the operation device and sound volume, which is the feedback amount.
FIG. 8C is a diagram showing an example of a relationship between the Y coordinate of the operation target on the display screen of the operation device and interval, which is the feedback amount.
FIG. 9A is a diagram showing the location of an operation target on the display screen of the operation device.
FIG. 9B is a diagram showing an example of a sound field, which is the feedback amount.
FIG. 9C is a diagram showing an example of a relationship between time of movement timing of the operation target on the display screen of the operation device and sound volume in a front part of the vehicle, which is the feedback amount.
FIG. 9D is a diagram showing an example of a relationship between time of movement timing of the operation target on the display screen of the operation device and sound volume in a rear part of the vehicle, which is the feedback amount.
FIG. 10A is a diagram showing an example of movement of an operation target on the display screen of the operation device.
FIG. 10B is a diagram showing an example of movement of an operation target on the display screen of the operation device.
FIG. 10C is a diagram showing an example of movement of an operation target on the display screen of the operation device.
FIG. 10D is a diagram showing an example of movement of an operation target on the display screen of the operation device.
FIG. 11 is a block diagram of an operation device according to a modified example of the embodiment.

### DESCRIPTION OF EMBODIMENTS

Hereunder is a description of an operation device according to an embodiment of the present invention, with reference to the appended drawings.

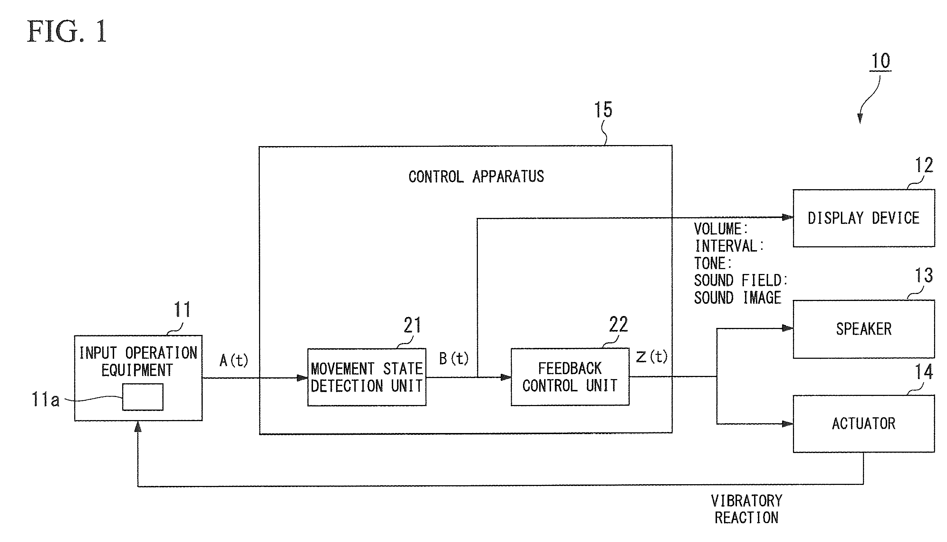

An operation device 10 according to the present embodiment is installed in a vehicle, for example, and as shown in FIG. 1, comprises: input operation equipment (input device) 11; a display device 12; a speaker 13; an actuator 14; and a control apparatus 15.

The input operation equipment 11 is a pointing device that can move an appropriate operation target displayed on a display screen 12a of the display device 12 in response to an input operation of an operator (for example, a driver of the vehicle). It has a substantially planar operating section 11a disposed for example in a predetermined location in the vehicle compartment where a driver of the vehicle can operate, detects the contact location of the driver's finger with respect to the operating section 11a, and performs operational input with respect to the operation target on the display screen 12a corresponding to the detected result.

The input operation equipment 11 outputs an operational input A(t) signal indicating the amount of an operation state (for example, operation direction, operation amount, etc.) at an appropriate time t, which changes sequentially in response to the input operation of the operator.

The display device 12 is provided for example with the display screen 12a disposed in the vehicle compartment such that it can be perceived visually by the driver of the vehicle. The display screen 12a is disposed for example below the top surface of an instrument panel mounted in the vehicle compartment, and is controlled by the control apparatus 15.

The speakers 13 are disposed in a plurality of locations (for example, two locations on the left and right of the front part of the vehicle and two places on the left and right of the rear part of the vehicle) in the vehicle compartment, for example, such that a driver of the vehicle can hear them, and are controlled by the control apparatus 15.

The actuator 14 comprises for example a motor or the like, which can be driven by the control apparatus 15, generates vibrations in the input operation equipment 11, and applies a reactive force to an input operation of the operator with respect to the input operation equipment 11.

The control apparatus 15 comprises for example a movement state detection unit 21 and a feedback control unit 22.

The movement state detection unit 21 detects the movement state amount of an operation target (for example a cursor or image), which moves on the display screen 12a of the display device 12 in response to input operations of the operator, with respect to the input operation equipment 11, based for example on a signal of the operational input A(t) output from the input operation equipment 11.

Then, it outputs a signal of the detected result of the movement state amount B(t) at an approximate time t, which changes successively in response to input operations of the operator with respect to the input operation equipment 11.

The movement state amount B(t) is a motion vector, movement speed, movement acceleration, or the like, which comprises the position on the display screen 12a, the direction of movement on the display screen 12a, and the relative movement amount with respect to the position prior to the start of the movement.

The feedback control unit 22 performs predetermined feedback to the operator such that he or she can perceive the operation target displayed on the display screen 12a, without looking at it directly, in response to the fact that the operation target has moved on the display screen 12a accompanying the input operation of the operator with respect to the input operation equipment 11.

The feedback control unit 22 generates a feedback amount Z(t) that changes continuously accompanying the movement state amount B(t), based for example on a signal of the detected result of the movement state amount B(t) output from the movement state detection unit 21, and performs feedback to the operator using this feedback amount Z(t).

The change in the movement state amount B(t) is, for example, the change in at least one of the movement speed of the operation target on the display screen 12a and the relative movement amount with respect to the position of the operation target on the display screen 12a prior to the start of the movement, or the change in the position of the operation target on the display screen 12a, the change in the direction of the movement of the operation target on the display screen 12a, and the change in the movement acceleration of the operation target on the display screen 12a.

Moreover, the feedback amount Z(t) is, for example, the amount of a range of states (for example volume, interval, tone, sound field, sound image, and frequency of sound output repetition) for a sound output from the speakers 13, the amount of a range of states (for example, frequency and amplitude) for vibrations transmitted to the input operation equipment 11 by the actuator 14, and the amount of a range of states (for example, amplitude) for a reactive force of the operation input applied to the input operation equipment 11 by the actuator 14.

For example, the feedback control unit (audible feedback device) 22 changes at least one of the frequency and volume of the sound generated from the speaker 13 in an increasing trend as at least one of the movement speed of the operation target on the display screen 12a and the relative movement amount with respect to the position of the operation target on the display screen 12a prior to the start of the movement increases.

Furthermore, for example, the feedback control unit (audible feedback device) 22 changes the image of the sound generated from the speakers 13 in response to a change in the movement direction of the operation target so as to correspond to the movement direction of the operation target on the display screen 12a.

Moreover, for example, the feedback control unit (vibratory feedback device) 22 changes at least one of the frequency and amplitude of the vibrations transmitted to the input operation equipment 11 by the actuator 14 in an increasing trend as at least one of the movement speed of the operation target on the display screen 12a and the relative movement amount with respect to the position of the operation target on the display screen 12a prior to the start of the movement increases.

The operation device 10 according to the present embodiment has the above-described construction. Next is a description of the operation of this operation device 10.

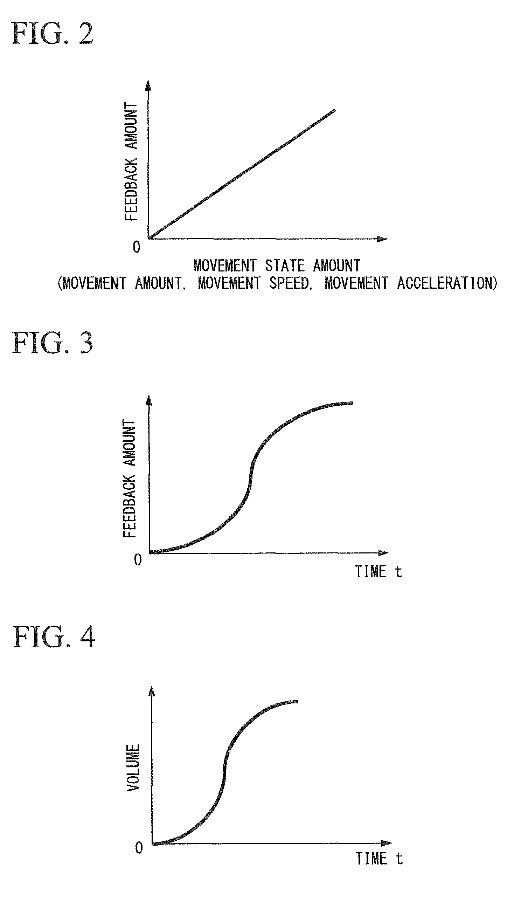

For example as shown in FIG. 2, the feedback control unit 22 generates a feedback amount Z(t) that changes in an increasing trend as the movement state amount B(t), such as the relative movement amount with respect to the position of the operation target on the display screen 12a prior to the start of the movement, the movement speed, or the movement acceleration, increases.

Furthermore, for example as shown in FIG. 3, the feedback control unit 22 is set in such a way that during the period from the start of the movement of the operation target on the display screen 12a until the end of the movement, in the initial period when the movement starts, the rate of increase in the feedback amount changes in an increasing trend as time t elapses, and in the closing period when the movement ends, the rate of increase in the feedback amount changes in a decreasing trend as time t elapses.

Moreover, for example as shown in FIG. 4, the feedback control unit 22 is set in such a way that during the period from the start of the movement of the operation target on the display screen 12a until the end of the movement, in the case where the feedback amount is the sound volume of a sound output from the speakers 13, in the initial period when the movement starts, the rate of increase in the volume changes in an increasing trend as time t elapses, and in the closing period when the movement ends, the rate of increase in the volume changes in a decreasing trend as time t elapses.

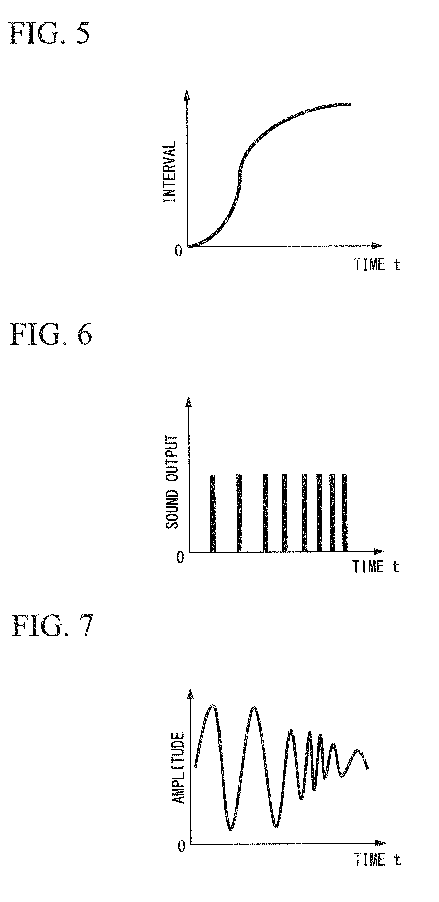

Furthermore, for example as shown in FIG. 5, the feedback control unit 22 is set in such a way that during the period from the start of the movement of the operation target on the display screen 12a until the end of the movement, in the case where the feedback amount is the interval of a sound output from the speakers 13, in the initial period when the movement starts, the rate of increase in the interval changes in an increasing trend as time t elapses, and in the closing period when the movement ends, the rate of increase in the interval changes in a decreasing trend as time t elapses.

Moreover, for example as shown in FIG. 6, the feedback control unit 22 is set in such a way that during the period from the start of the movement of the operation target on the display screen 12a until the end of the movement, in the case where the feedback amount is the frequency of repeating a sound output of a sound output from the speakers 13, the frequency changes in an increasing trend as time t elapses.

Furthermore, for example as shown in FIG. 7, the feedback control unit 22 is set in such a way that during the period from the start of the movement of the operation target on the display screen 12a until the end of the movement, in the case where the feedback amount is the amplitude of the vibration transmitted to the input operation equipment 11 by the actuator 14, the amplitude changes in a decreasing trend as time t elapses.

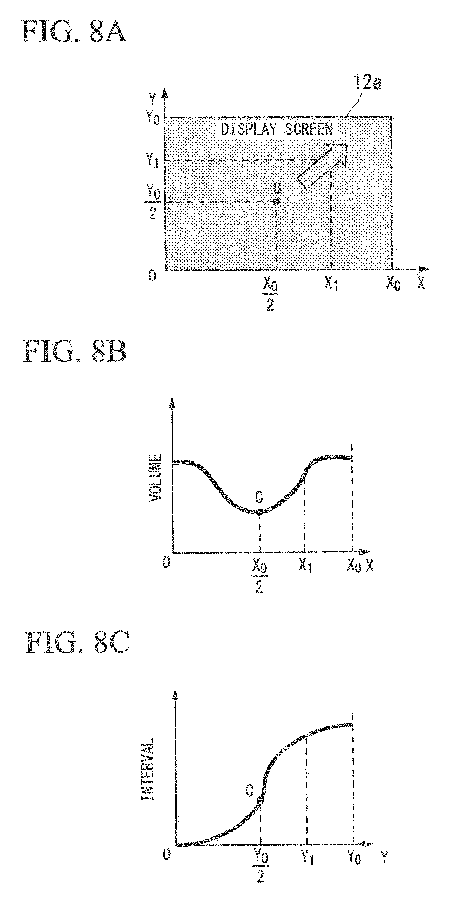

Moreover, for example as shown in FIG. 8A to 8C, in the case where the feedback amount corresponding to the position of the operation target on the display screen 12a (for example, two-dimensional coordinate positions (X, Y) of the X coordinate and the Y coordinate) is the volume and interval of a sound output from the speakers 13, the feedback control unit 22 changes them continuously corresponding to the position of the operation target.

For example, the feedback control unit 22 is set in such a way that the sound volume changes in a decreasing trend as the X coordinate of the operation target on the display screen 12a increases from zero toward the center C of the display screen 12a, and the sound volume changes in an increasing trend as the X coordinate departs further and further away from the center C of the display screen 12a.

Moreover, for example, it is set in such a way that the rate of increase in the interval changes in an increasing trend as the Y coordinate of the operation target on the display screen 12a increases from zero toward the center C of the display screen 12a, and the rate of increase in the interval changes in a decreasing trend as the Y coordinate departs further and further away from the center C of the display screen 12a.
FIGS. 8A to 8C are one example of a case where the operation target on the display screen 12a is a two-dimensional coordinate position (X1, Y1).

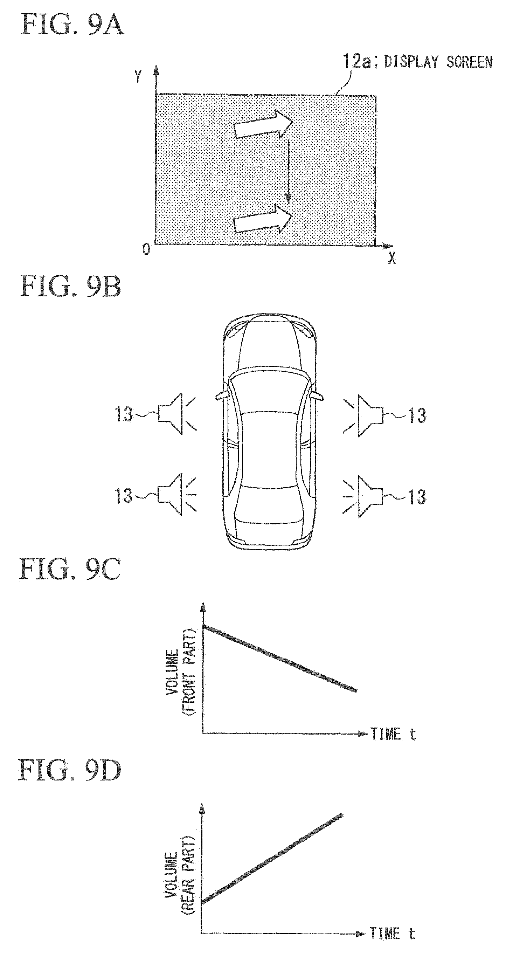

Furthermore, in the case where the feedback amount corresponding to the position of the operation target on the display screen 12a (for example, two-dimensional coordinate position (X, Y) of the X coordinate and the Y coordinate) is the field of a sound output from the speakers 13, the feedback control unit 22 changes the sound field continuously corresponding to the position of the operation target as shown for example in FIG. 9A to 9C.

For example, as the Y coordinate of the operation target on the display screen 12a changes in a decreasing trend, the feedback control unit 22 changes the volume of the speakers 13 disposed in two locations on the left and right of the front part of a vehicle in a decreasing trend, and changes the volume of the speakers 13 disposed in two locations on the left and right of the rear part of the vehicle in an increasing trend.

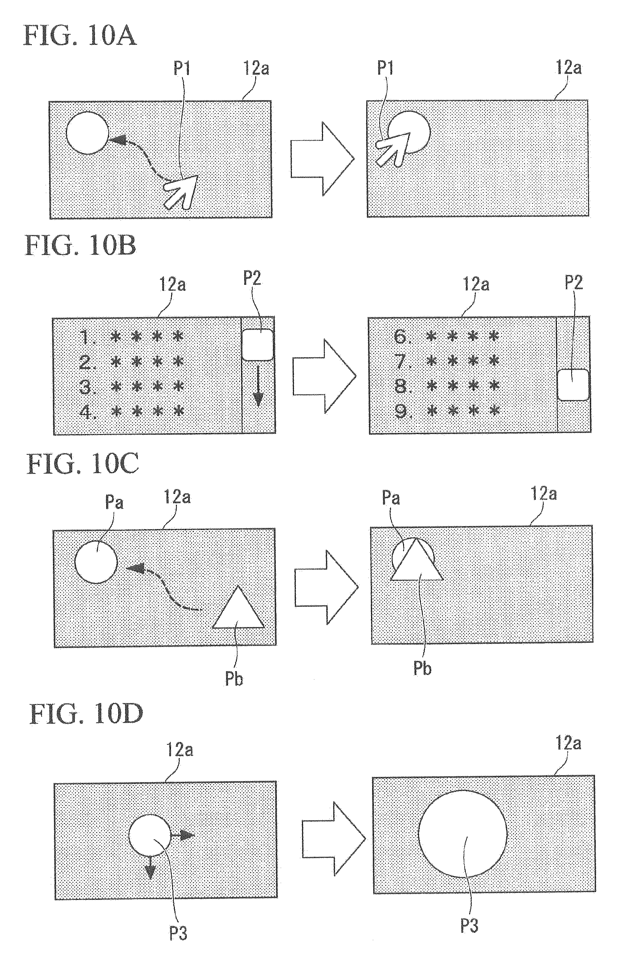

The movement of the operation target on the display screen 12a corresponding to the input operation of the operator with respect to the input operation equipment 11 includes for example, as shown in FIG. 10A, a pointing operation by the movement of a predetermined graphic P1, which points at a desired position on the display screen 12a,.

Moreover, the movement of the operation target on the display screen 12a corresponding to the input operation of the operator with respect to the input operation equipment 11 includes for example, as shown in FIG. 10B, a scrolling operation of the display screen 12a, which involves the movement of a predetermined scroll instruction graphic P2.

Furthermore, the movement of the operation target on the display screen 12a corresponding to the input operation of the operator with respect to the input operation equipment 11 includes for example, as shown in FIG. 10C, a drag and drop operation in which an appropriate graphic Pb on the display screen 12a is moved and placed above another graphic Pa.

Moreover, the movement of the operation target on the display screen 12a corresponding to the input operation of the operator with respect to the input operation equipment 11 includes for example, as shown in FIG. 10D, an expanding and contracting operation, in which a graphic P3 on the display screen 12a is expanded (or contracted),.

As described above, according to the operation device 10 of the present embodiment, by implementing continuous feedback corresponding to the movement of the operation target, the operator can perceive the movement state (that is, at least one of the movement speed and the relative movement amount with respect to the position on the display screen 12a prior to the start of the movement) of the operation target accurately with no need to gaze at the operation target displayed on the display screen 12a.

By so doing, the operator can easily learn the relationship between the input operation to the input operation equipment 11 and the movement state of the operation target. Hence so-called blind operation in which the operation target is operated without looking at the display screen 12a, can be performed easily, and the convenience can be improved.

Furthermore, since feedback is implemented using at least one of the frequency and sound volume of a sound, or a sound image, it is possible to have the operator perceive easily, a continuous change in the movement state of the operation target.

Moreover, since feedback is implemented using vibration, it is possible to have only the operator perceive easily, a continuous change in the movement state of the operation target, so that it is possible to avoid excessive feedback being implemented.

Furthermore, even in the case where an operation target is displayed on a display screen 12a disposed in a location where the driver's line of sight departs greatly from the front windshield of the vehicle (that is, below the top surface of an instrument panel mounted in the vehicle compartment), the driver can perceive the movement state of the operation target accurately with no need to gaze at the operation target displayed on the display screen 12a. Hence so-called blind operation can be performed easily, and the convenience can be improved.

Moreover, with respect to input operation equipment 11 such as a touch panel, for which it is difficult to ascertain a tactile relationship with the state of the operation target (for example, the location of a cursor, the amount of movement, etc.), the operator can perceive the state of movement of the operation target accurately and easily with no need to gaze at the operation target displayed on the display screen 12a. Hence so-called blind operation can be performed easily, and the convenience can be improved.

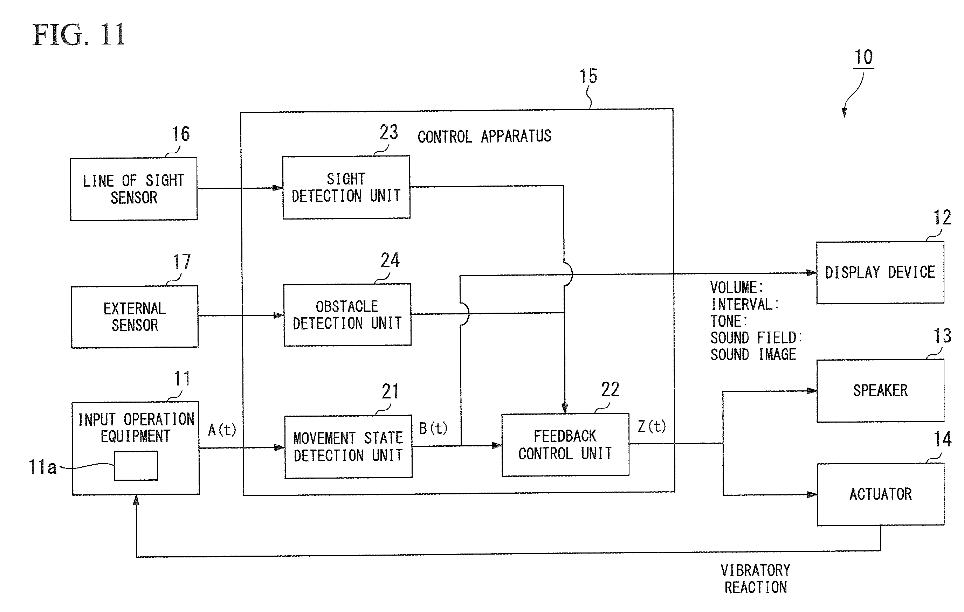

An operation device 10 according to a modified example of the above-described embodiment comprises for example as shown in FIG. 11: input operation equipment 11; a display device 12; a speaker 13; an actuator 14; a control apparatus 15, a line of sight sensor (line of sight detection device) 16; and an external sensor (obstacle detection device) 17.

Furthermore, in this modified example, the control apparatus 15 comprises for example: a movement state detection unit 21, a feedback control unit 22, a line of sight detection unit (line of sight detection device) 23, and an obstacle detection unit (obstacle detection device) 24.

The line of sight sensor 16 is provided with an occupant camera (not shown in the figure) that encompasses at least the face of an occupant seated on a seat in a vehicle, as an image target within an image region, can capture images in the visible light region and infrared region, and outputs a facial image containing the occupant's face obtained by sequential image capture, to the control apparatus 15.

The external sensor 17 comprises for example; a radar apparatus using an infrared laser and electromagnetic waves such as millimeter waves, an image capture apparatus, and a heat source tracking device or the like.

For example, the radar apparatus divides a detection target region established outside of a vehicle, into a plurality of angular regions such that each angular region is scanned, and transmits a transmission signal of electromagnetic waves. Then it receives reflected signals generated by each signal being reflected by an object (for example, another vehicle, a structure, etc.) outside of the vehicle, or a pedestrian, generates a detection signal associated with the distance from the radar device to the external object or the pedestrian, and outputs it to the control apparatus 15.

Furthermore, for example, the image capture apparatus generates image data by performing predetermined image processing on the image obtained by capturing an image capture region set outside of the vehicle, and outputs it to the control apparatus 15.

The line of sight detection unit 23 performs for example predetermined perception processing with respect to an image of an occupant's face output from the occupant camera of the line of sight sensor 16 to detect the central location of the pupils or irises of the occupant's eyes, a reflection point (for example, the central location of a Purkinje image, being a reflected image of infrared rays) on the cornea surface of a light radiated from a predetermined light source (not shown in the figure), the locations of the inner corners of the occupant's eyes, and the like.

Then, based on these detection results, it detects for example the direction of the occupant's line of sight from a relative distance between the central location of the pupils or irises of the eyes and the reflection point of the cornea surface, or a relative distance between the central location of the pupils or irises of the eyes and the locations of the inner corners.

The obstacle detection unit 24 detects an obstacle such as another vehicle, a structure, or a pedestrian, existing outside of the vehicle, based for example on a detection signal output from the radar apparatus of the external sensor 17, or image data output from the image capture apparatus. Then, it detects the distance to the obstacle, the movement speed and movement direction of the obstacle, the location of the obstacle, and the like, and outputs a signal of the detection results.

In this modified example, the feedback control unit 22, for example in a state in which a predetermined sound is emitted from the speakers 13 corresponding to the movement of the operation target on the display screen 12a, in the case where based on the signal of the detection result output from the obstacle detection unit 24, there is an obstacle approaching the vehicle, emits a sound (for example, a warning sound) different from the predetermined sound emitted corresponding to the movement of the operation target, whose sound image is in the direction where the obstacle exists.

By so doing, it is possible to have a driver performing an input operation to the input operation equipment 11 perceive the direction where the obstacle approaching the vehicle exists promptly and accurately, which enables the convenience and safety of the travelling vehicle to be improved.

Furthermore, the feedback control unit 22, for example, based on the detection result of the direction of the operator's line of sight output from the line of sight detection unit 23, determines whether or not the direction of the operator's line of sight is toward the display screen 12a, and determines whether or not to implement feedback corresponding to the determination result.

For example, in the case where it is determined that the direction of the operator's line of sight is not towards the display screen 12a, the feedback control unit 22 implements feedback, and in the case where it is determined that the direction of the operator's line of sight is towards the display screen 12a, stops the implementation of feedback.

By so doing, in the case where the direction of the operator's line of sight is toward the display screen 12a, so-called feedback by display is implemented, making other feedback unnecessary, so that it is possible to avoid excessive feedback from being implemented, and to prevent the operator from being discomforted or disturbed.

In the operation device 10 according to the above-described embodiment, the feedback control unit 22 generates a feedback amount corresponding to the movement state amount of the operation target on the display screen 12a. However, this is not a limitation, and a feedback amount corresponding to the position of the operation target on the display screen 12a may be further generated.

For example, the feedback control unit 22 is set such that having a predetermined position on the display screen 12a as a reference position, the feedback amount is changed in an increasing trend as this reference position is departed from.

In the operation device 10 according to the above-described embodiment, the feedback control unit 22 may store the history of input operations by the operator to the input operation equipment 11, estimate from the detection results for input operation smoothness, operation speed, and the like, the degree of expertise or the level of proficiency of the input operations to the input operation equipment 11, and increase the feedback amount for a lower degree of expertise and level of proficiency.

Moreover, in the operation device 10 according to the above-described embodiment, the feedback control unit 22 may store the history of input operations by the operator to the input operation equipment 11, and increase the feedback amount as the frequency of performing input operations reduces, corresponding to the detection result of the execution frequency of the input operations.

Furthermore, in the operation device 10 according to the above-described embodiment, the feedback control unit 22 may change the feedback amount corresponding to the volume of the external noise (for example, the sound that a driver can hear, or vibratory noise acting on the input operation equipment 11 caused by the vehicle vibration).

Moreover, in the operation device 10 according to the above-described embodiment, in the case where stimulation to the driver, such as sound output or generation of vibrations, is applied due to operations with higher priority (for example, a range of alarm operations), the feedback control unit 22 may reduce the feedback amount of other operations with lower priority.

In the operation device 10 according to the above-described embodiment, the input operation equipment 11 may be for example; a touch panel, a touch pad, a mouse, a track ball, a joystick, a pen tablet, a dial switch, a push button, a gesture input device, or a remote input device.

Furthermore, in the operation device 10 according to the above-described embodiment, the display device 12 may be for example; a dashboard display in which the display screen 12a is disposed on the top of the dashboard of a vehicle, a head-up display that uses the front windshield of the vehicle as the display screen 12a, a multi information display in which a display screen is disposed on an instrument panel of the vehicle, or a display in which the display screen 12a is disposed in the vicinity of a range of instruments of the instrument panel of the vehicle.

### INDUSTRIAL APPLICABILITY

According to the present invention, it is possible to provide an operation device that enables an operator to perceive the movement of an operation target as feedback, without requiring him or her to gaze at a screen.

### [Description of Reference Symbols]

- 10: Operation device
- 11: Input operation equipment (Input device)
- 11a: Operating section
- 12: Display device
- 12a: Display screen
- 16: Line of sight sensor (Line of sight detection device)
- 17: External sensor (Obstacle detection device)
- 22: Feedback control unit (Feedback device, Audible feedback device, Vibratory feedback device)
- 23: Line of sight detection unit (Line of sight detection device)
- 24: Obstacle detection unit (Obstacle detection device)

## Claims

1. An operation device provided with:
a display screen that displays an operation target that can be operated by an operator;
an input device that can perform operational input with respect to a direction of movement of the operation target on the display screen; and
a feedback device that implements, in response to the operation target having moved on the display screen in accordance with operational input by the input device, predetermined feedback that can be perceived without the operator looking directly at the operation target displayed on the display screen, wherein
the input device can perform operational input with respect to the movement speed and amount of movement in the direction of movement of the operation target on the display screen, and
the feedback device implements the feedback in such a way that a state of the feedback continuously changes in response to a change in at least one of the movement speed of the operation target and the relative movement amount with respect to a position of the operation target on the display screen prior to the start of the movement.

2. An operation device according to claim 1, wherein the feedback device has an audible feedback device that implements the feedback by generating sound,
and changes at least one of the frequency and volume of the sound generated from the audible feedback device in an increasing trend as at least one of the movement speed of the operation target and the relative movement amount with respect to a position of the operation target on the display screen prior to the start of the movement increases.

3. An operation device according to claim 1, wherein the feedback device has an audible feedback device that implements the feedback by generating sound,
and changes an image of the sound in response to a change in the movement direction of the operation target so as to correspond to the movement direction of the operation target.

4. An operation device according to claim 1, wherein
the display screen and the feedback device are mounted in a vehicle,
the feedback device has an audible feedback device that implements the feedback by generating sound,
the input device is disposed in a predetermined location in a vehicle compartment where a driver of the vehicle can operate, and has an obstacle detection device that detects a direction in which an obstacle approaching the vehicle exists,
and the audible feedback device, in a case where an obstacle approaching the vehicle is detected by the obstacle detection device, generates a different sound from the sound generated in response to the movement of the operation target, using a sound image in a direction where the obstacle detected by the obstacle detection device exists.

5. An operation device according to claim 1, wherein
the feedback device has a vibratory feedback device that implements the feedback by transmitting vibrations to the input device,
and changes at least one of the frequency and amplitude of the vibrations transmitted to the input device by the vibratory feedback device in an increasing trend as at least one of the movement speed of the operation target and the relative movement amount with respect to a position of the operation target on the display screen prior to the start of the movement increases.

6. An operation device according to claim 1, wherein there is further provided a line of sight detection device that detects a direction of the operator's line of sight, and that determines whether or not the direction of the line of sight detected is toward the display screen,
and the feedback device, in a case where the line of sight detection device determines that the direction of the operator's line of sight is not toward the display screen, implements the feedback, and in a case where the line of sight detection device determines that the direction of the operator's line of sight is toward the display screen, does not implement the feedback.

7. An operation device according to claim 1, wherein the display screen is a display that is disposed below a top surface of an instrument panel installed in a vehicle compartment,
and the input device has a substantially planar operating section disposed in a predetermined location in the vehicle compartment where a driver of the vehicle can operate, detects a contact location of the driver's finger with respect to the operating section, and performs operational input with respect to the operation target corresponding to the detected result.

## Amended claims

### Amended claims under Art. 19.1 PCT

**1.** Amended) An operation device provided with:
a display screen that displays an operation target that can be operated by an operator;
an input device that can perform operational input with respect to a direction of movement of the operation target on the display screen; and
a feedback device that implements, in response to the operation target having moved on the display screen in accordance with operational input by the input device, predetermined feedback that can be perceived without the operator looking directly at the operation target displayed on the display screen, wherein
the input device can perform operational input with respect to the movement speed and amount of movement in the direction of movement of the operation target on the display screen, and
the feedback device implements the feedback in such a way that a state of the feedback continuously changes in response to a change in at least one of the movement speed of the operation target on the display screen and the relative movement amount with respect to a position of the operation target on the display screen prior to the start of the movement.

**2.** An operation device according to claim 1, wherein the feedback device has an audible feedback device that implements the feedback by generating sound,
and changes at least one of the frequency and volume of the sound generated from the audible feedback device in an increasing trend as at least one of the movement speed of the operation target and the relative movement amount with respect to a position of the operation target on the display screen prior to the start of the movement increases.

**3.**
An operation device according to claim 1, wherein the feedback device has an audible feedback device that implements the feedback by generating sound,
and changes an image of the sound in response to a change in the movement direction of the operation target so as to correspond to the movement direction of the operation target.

**4.**
An operation device according to claim 1, wherein
the display screen and the feedback device are mounted in a vehicle,
the feedback device has an audible feedback device that implements the feedback by generating sound,
the input device is disposed in a predetermined location in a vehicle compartment where a driver of the vehicle can operate, and has an obstacle detection device that detects a direction in which an obstacle approaching the vehicle exists,
and the audible feedback device, in a case where an obstacle approaching the vehicle is detected by the obstacle detection device, generates a different sound from the sound generated in response to the movement of the operation target, using a sound image in a direction where the obstacle detected by the obstacle detection device exists.

**5.**
An operation device according to claim 1, wherein
the feedback device has a vibratory feedback device that implements the feedback by transmitting vibrations to the input device,
and changes at least one of the frequency and amplitude of the vibrations transmitted to the input device by the vibratory feedback device in an increasing trend as at least one of the movement speed of the operation target and the relative movement amount with respect to a position of the operation target on the display screen prior to the start of the movement increases.

**6.**
An operation device according to claim 1, wherein there is further provided a line of sight detection device that detects a direction of the operator's line of sight, and that determines whether or not the direction of the line of sight detected is toward the display screen,
and the feedback device, in a case where the line of sight detection device determines that the direction of the operator's line of sight is not toward the display screen, implements the feedback, and in a case where the line of sight detection device determines that the direction of the operator's line of sight is toward the display screen, does not implement the feedback.

**7.** An operation device according to claim 1, wherein the display screen is a display that is disposed below a top surface of an instrument panel installed in a vehicle compartment,
and the input device has a substantially planar operating section disposed in a predetermined location in the vehicle compartment where a driver of the vehicle can operate, detects a contact location of the driver's finger with respect to the operating section, and performs operational input with respect to the operation target corresponding to the detected result.

**8.** addition) An operation device according to claim 1, wherein
the feedback device estimates from the smoothness and operation speed of the input operation, a degree of expertise of the input operation to the input device, and increases the feedback amount for a lower degree of expertise.

**9.** addition) An operation device according to claim 1, further comprising a storage device that stores history of input operations by the operator to the input device,
and the feedback device increases the feedback amount as the frequency of performing the input operation reduces.
